# EUROPEAN PATENT APPLICATION

(11) **EP 2 415 727 A1**
(43) Date of publication of application: **08.02.2012**
(21) Application number: 10758098.7
(22) Date of filing: 26.03.2010
(51) Int. Cl.: C04B 18/20, C04B 18/24

(54) **LOW-DENSITY MORTAR WITH THERMOACOUSTIC PROPERTIES**

(30) Priority: 31.03.2009 ES 200900871
(71) Applicant: Castañe Callis, Jordi, 08560 Barcelona (ES)
(72) Inventor: Castañe Callis, Jordi, 08560 Barcelona (ES)
(74) Representative: Isern-Jara, Nuria
(86) International application number: PCT/ES2010/070183
(87) International publication number: WO 2010/112653

(57) **Abstract**

The invention relates to a floating mortar mix or mortar **characterised in that** said mortar is recyclable and contains low-density materials, mainly selected from botanical, household and industrial waste, new and used empty containers, packaging, polystyrenes, polyurethanes and polyisocyanates, inter alia. The present invention also relates to the method for producing said mortar as well as to the various uses thereof.

## Description

### FIELD OF THE INVENTION

This invention relates to the field of the chemistry of materials and specifically to the field of construction and recycling.

Specifically, this invention relates to a mortar or floating mortar mix **characterised in that** it contains low-density materials, mainly selected from household, botanical and industrial waste, such as new or used empty containers, packaging, polystyrenes, polyurethanes and polyisocyanates, reeds, cork, straw, sawdust, wood shavings and even metal shavings, plant roots, pearlite, vermiculite, rock wool, resins, even acrylic resins, water, air, helium, etc.

The present invention also relates to the method for producing said mortar as well as to the various uses thereof.

### BACKGROUND TO THE INVENTION

The invention is related to mortar or floating mortar mix **characterised in that** it contains low-density materials mainly selected from household, botanical and industrial waste, such as new or used empty containers, packaging, polystyrenes, polyurethanes and polyisocyanates, reeds, cork, straw, sawdust, wood shavings and even metal shavings, plant roots, pearlite, vermiculite, rock wool, resins, even acrylic resins, water, air, helium, etc.

According to the background to the state of the art, the use of low-density materials to obtain a floating mortar from recycled materials would not appear obvious. Thus, patent E88114039 refers to a self-levelling mortar mix that contains synthetic anhydrite, stimulating salts, liquefiers, surface-active substances and water, which can be used in the production of such construction elements as synthetic anhydrite pavements, activating salts, liquefiers, surface-active substances and water.

The German patent application DE2657252 shows a procedure for manufacturing a mass that flows freely, composed of anhydrite, an activator, a resin modified with sulphonic acid on a base of amino-s-triazine with at least two NH₂ groups as liquefiers, nonylphenol-hexaglycolether as the crosslinker and water. Flooring manufactured in this way has a series of drawbacks, such as the structure being prone to cracking.

Patent E00811200 describes a mortar that can be hardened by frontal polymerisation after thermal initiation, **characterised in that** it contains a) at least one polymerisable monomer and/or at least one hardenable resin, b) at least one polymerisation initiator, which can be thermally activated and/or released thermally at a temperature of more than 30° C, for the monomers and/or polymerisable hardening accelerants for the reversible resin and c) given the case at least one filler material, the type and the amount of polymerisable monomers or hardenable resin and polymerisation initiator or hardener accelerant being selected in such a way that after the polymerisation has been activated, the velocity of the polymerisation front (front velocity) obtained is at least 10 cm/min.

Patent P200602255 refers to a mortar, which contains microcapsules of phase-change materials (PCM), the procedure for obtaining it and the use thereof in the inner linings of construction systems, making insulation more efficient and, as a result, giving it potential for greater energy saving. These mortars are **characterised in that** they contain microcapsules of phase-change materials (PCM) only in the finish layer, between the various layers that make up the inner linings of construction systems, thereby making it possible to keep the interior temperature close to the comfort temperature while consuming less electricity than current systems. The microcapsules of phase-change materials (PCM) are applied to said mortars by adding them to the cement or to other binders, a procedure that is **characterised in that** it is very simple to use, in view of the fact that the items of equipment that apply them in practice are extensively used in this field, the PCM microcapsules being treated as additives that are added during the mixing process.

Patent P8801654 is a procedure for preparing mortar with asphalt and polymers, **characterised in that** a mix prepared beforehand is added to the asphalt, this mix containing a copolymer of ethylene/vinyl acetate and a polyisobutylene, whose molecular weight ranges from 400 to 1,000.

As can be seen, none of the documents of the state of the art offers a mortar based on low-density materials, in which said mortar gives rise to the generation of a recyclable floating mortar to be used in floating materials such as floating objects and that is **characterised in that** it has fire-resistance and thermoacoustic properties, allowing it to be used in the manufacture of thermoacoustic structures.

### DESCRIPTION OF THE INVENTION

This invention relates to a mortar or floating mortar mix **characterised in that** it contains low-density materials, mainly selected from household, botanical and industrial waste, such as empty containers, tubing, packaging, polystyrenes, polyurethanes and polyisocyanates, reeds, cork, straw, sawdust, wood shavings and even metal shavings, plant roots, pearlite, vermiculite, rock wool, resins, even acrylic resins, water, air, helium, etc.

Apart from the low-density elements, the recyclable floating mortar of this invention also contains acrylic-cement mixes, polymers, synthetic resins such as polyester or polyurethane mixes, light thermoacoustic waste, forestry waste such as raw cork or waste cork, reeds or roots, fibres, ironwork, meshing, wiring and cables, slings, glass, ceramics, stainless materials, timber, decorative elements, etc., which are bound together to form a heterogeneous block that preferably is large in size or format.

It is a mortar or artificial mix made of volumetric bodies of various composition, weight, shape and size, the one common denominator being that all the materials are of low density and from a variety of sources, including household and industrial waste, empty containers, packaging, etc., bonded, agglomerated and homogenised using acrylic-cement mixes, polymers, synthetic resins such as polyester or polyurethane mixes, etc. and strengthened with fibres, ironwork, meshing, cables and wires, slings, etc. to form a cohesive heterogeneous block that is generally large in size or format.

Depending on the intended application for the mortar, materials of different thermal and/or acoustic coefficients may be used, adapted to the type of material that one wishes to obtain. The thermal and/or acoustic materials are selected from the group comprising cork, clay, air, polystyrenes, polyurethanes, mineral fibres or vegetable fibres, either in solid, liquid or gaseous state. These materials are used with a view to obtaining blocks or panels either with the same, with different or with a variety of compositions containing partitions of binding material not only to join them, but also to separate or make independent the different layers or strata of thermal or acoustic materials, especially in the event of fire or to combat the effects of damp, thus providing the required mass or barrier to provide greater thermo-acoustic and fire- and water-resistance effectivity, and to ensure that the element is more rigid and/or that its format can be increased.

In all cases, the mortar that is the object of this invention is **characterised in that** it is composed of low- or very low-density materials which are conducive to the material being buoyant and that it can also have positive thermoacoustic properties.

A preferred use of this invention is in the manufacturing of floating materials, the following being a non-limiting list: floating objects, different kinds of platforms on water, bridges, marine or river marker buoys, oyster beds, seafood hatcheries, floating islands, breakwater construction, floating docks and pontoons, jetties, artificial reefs, etc., ordnance and supplies depots (filling up holes in packaging), artificial beaches, platforms for wind farms and solar energy installations, etc.

If elements with thermal and/or acoustic properties are incorporated, the invention can also be used in the manufacture of either discretionary or customised thermoacoustic blocks or panels of all types including, for example, for construction, insulation, soundproofing and waterproofing and decorating buildings, especially because it will be possible to manufacture single-block elements or individual pieces that can enhance the thermoacoustic, fire-and water-resistant solutions and even be used to decorate buildings in an entirely discretionary way, using materials that are made of common components and also of diverse composition, not only facilitating the tasks involved and the ironwork used in it, but also saving space, weight, time and transport, as well as providing a greater degree of safety where the risk of fire is concerned, improved sealing qualities, improved thermoacoustic effectiveness, and generally helping to optimise traditional construction systems as well as reducing effort, time and money to a minimum.

One of the advantages that said mortar has over the state-of-the-art, is that until the present time there have been no references to combining into one single block or piece, various materials that have hitherto been regarded as mutually incompatible, such as combining those that are obtained from petroleum and considered to be highly flammable, with natural materials or minerals that are considered to be practically unflammable, so that they can form one single structure or block that brings together each one of the properties that constitute the structure and that at the same time keeps them all protected from external phenomena such as fire and damp, owing to the fact that what is used to bind each one of the elements that make up the mortar structure slows down such processes and protect as well as bind every constituent element.

It also has the advantage of being environmentally friendly, because it enables the user to make the most of numerous disposable household and industrial materials that needed to be recycled and that can now be used directly as raw materials, which facilitates their reuse and thus their recycling.

The procedure for obtaining the mortar that is the object of this invention has the following characteristics.

By way of non--limiting illustration, normally large moulds or containers are used into which a homogeneous or heterogeneous mix of low-density materials is poured (light materials and/or empty elements such as simple packaging), recycled, used or new, bound together with acrylic-cement products, reinforcement fibres, polymers and other products, solid, liquid or gaseous or projected, whose binding process is assisted with the aid of external or internal vibrating elements until the average cohesion, homogenisation and density intended for the finished dry product are reached, this value ranging from 200 to 600 Kg/m³, by means of a selection process aimed at achieving the best coefficient in each particular case, with the ideal weight/volume and cohesion ratio.

One of the advantages that must be pointed out is the sustainability of the entire process, which involves the use or recycling of highly degradant waste, and reuses it without resorting to extremely pollutant thermo-fusion processes, using only the empty space defined by the packaging itself and its own outer surface or wall, whether this is polyvinyl chloride (PVC), cardboard, wood, glass or metal and which will serve as a mould or barrier, to shape the resulting universal low-density mortar.

After a process of settling or setting and drying, whether this is a natural or mechanised process, the mortar thus obtained will be ready for cutting into smaller pieces using such traditional systems as saws, block cutters, laser, etc., so that the formats obtained are easier to handle or transport, or merely in order to obtain replicas of natural stone, volcanic rock, etc., for the purpose of which the mortar is subsequently scraped, floated, machined, polished, flamed, etc., or so that it can be put directly into the water, where its buoyancy will be proportional to the weight of the volume of water it manages to displace.

Once the first block or blocks are joined together and/or are brought into contact with the riverbed or seabed using traditional stabilisation and mooring systems, the next phase could be depositing or stockpiling the selected mixes and products directly *in situ,* and doing so at periods of time that are sufficient to allow the mortar to set or solidify, until it reaches the desired weight, volume, shape and size.

If the user also wishes to provide said mortar with thermoacoustic properties, the main steps to be followed are as indicated below.

A mould or work bench or similar is used to make the layers or portions of thermal, acoustic or thermoacoustic and also decorative materials adhere or bind together, by means of a manual or automated system, while optionally incorporating fibres and/or reinforcement meshing, so that one piece with two or more bodies or layers can be obtained that are firmly bound, while at the same time remaining independent of each other and conserving their own intrinsic properties when exposed to a source of damp, noise, cold or even fire, as well as remaining shockproof and conserving their dimensional stability and torsional and bending properties.

This process enables the various thermoacoustic-decorative qualities of each constituent element of the mortar to combine and build up, thereby saving space, time, ironwork and installation methods, as well as ensuring that there is no unnecessary repetition of tasks and that energy is not wasted. It also helps to prevent degeneration, evaporation or the volatilization of particles as a result of the ageing of the materials used and, in summary, contributing to the "general sustainability" of the heat insulating and decorative products and systems.

The new format may be larger or smaller than the starting formats used in the manufacturing process of the new construction element, which means that they can be made in a more suitable, practical and robust format, and that the join can be made more solid and durable, making laying *in situ* much easier, and considerably increasing their fire resistance (FR), as well as being less costly than the systems and methods traditionally used to provide a similar construction solution or objective.

In a preferred but not limiting way, the construction materials are of small proportions, which enables them to be used as bricks or as bases for larger constructions.

This system enables the manufacturer to give free rein to the manufacture of tailor-made or customised single-block elements on the basis of the requirements of each building or to cater for differences between regions and countries, merely by combining the different elements already available on the market "individually", whether they are thermal or acoustic and/or decorative, which hitherto were not used either in a compact or single-block way, or with damp proof or fireproof partitioning.

The binding material may be either transparent, as is the case when binding two or more pieces of glass to each other, incorporating plain and/or decorative textile elements that will serve not only for adornment purposes but also to strengthen against potential breakage, and they can be provided with a thin layer of micro-mortar at the rear made of polyester or polyurethane resins and fine sand, for example from marble, with a view to facilitating the subsequent mortaring process with conventional materials.

Panels of the wall-tile type may also be constructed with the exposed surface made of wood, aluminium, stainless steel, metal sheeting, glass, PVC, Formica, stone, marble, ceramic material, etc., plus a thin layer of micro mortar and fine sand with or without reinforcement meshing.

Therefore, the general procedure that is the object of this invention includes the following steps:
a) Selecting the raw materials or low-density elements (as a whole) that are going to form the mortar,
c) Preparing a homogeneous or heterogeneous mix with the low-density materials from step b),
e) Agglutinating the mix obtained at step c) using adhesion materials selected from the group composed of acrylic-cement products, fibres and/or reinforcement meshing, polymers and other products, solid, liquid, gaseous or projected, and using external or internal vibrating elements until the average cohesion, homogenisation and density is reached for the finished dry product, this average ranging from 200 to 600 Kg/m³.
d) Pouring it onto the surface where it is to be used or into moulds or containers of different sizes, depending on what the mortar is to be used for.

A mortar will thus be obtained by means of a process that is totally sustainable and environmentally friendly, because it involves making use of or recycling waste that is highly degradant, reusing said waste without resorting to extremely pollutant thermo-fusion processes using only the empty space left by the packaging itself and its own outer surface or wall, whether this is polyvinyl chloride (PVC), cardboard, wood, glass or metal and which will serve as a shell, reinforcement or barrier, to shape the resulting universal low-density mortar.

It must also be pointed out that once the mortar is obtained and dried, it can be used in different ways:
- By merely pouring it into the water, where its buoyancy will be proportional to the weight of the volume of water it manages to displace, where it will provide a highly useful structure that can be used as floating material of any of the following non-limiting types: floating objects, different kinds of platforms on water, bridges, marine or river marker buoys, oyster beds, seafood hatcheries, floating islands, breakwater construction, floating docks and pontoons, jetties, artificial reefs, etc.
- By cutting it into smaller pieces using such traditional systems as saws, block cutters, laser, etc., so that the formats obtained are easier to handle or transport.
- By applying further handling processes such as scraping, floating, machining, polishing, flaming, etc., with a view to obtaining replicas of natural stone, volcanic rock, etc.
- By incorporating plain and/or decorative textile elements that will serve not only for adornment purposes but also to strengthen against potential breakage, which can be provided with a thin layer of micro-mortar at the rear, made of polyester or polyurethane resins and fine sand, for example from marble, with a view to facilitating the subsequent mortaring process with conventional materials, which is extremely useful when the materials originally selected are transparent in nature, such as glass, polyvinyl, polycarbonate or methacrylate.
- By adding panels of the wall-tile type, with the exposed surface made of wood, aluminium, stainless steel, metal sheeting, glass, PVC, formica, stone, marble, ceramic material, etc., plus a thin layer of micro mortar and fine sand with or without reinforcement meshing.

However, the denominator that is common to this mortar is that it is composed of low-density elements, the average density of the finished product ranging from 200 to 600 kg/m³, which means it is a mortar that is suitable for use in low-density materials such as floating materials or low-density materials that have thermoacoustic properties.

The universal, recyclable low-density mortar, consisting of the bound-together various volumetric bodies, preferably lightweight, from garden, household or industrial waste, such as empty containers, packaging, polystyrenes, polyurethanes, polyisocyanates, etc. into a heterogeneous (homogeneous) mix using acrylic polymers and cements, limes, various minerals, vegetable and mineral fibres, elastomers, plaster, synthetic resins, etc., whether in a solid, liquid, gaseous or projected state, as well as reinforcement meshing, ironwork, cables, slings, etc.

A construction system using moulds or containers, generally large, as well as an *in situ* stockpiling process, through directly providing the various construction elements, binders, etc., in either solid, liquid, gaseous or projected state.

Single-block discretionary thermoacoustic block or panel, comprising more than one separate element or layer that is firmly bound with binding material so that it will adhere for a long time, as in a previous claim, **characterised in that** the different elements or strata may be composed of thermal, acoustic or thermoacoustic materials and/or decorative materials, in a discretionary and customised manner, depending on the intended purpose or decorative-construction need.

The mortar, as a block or panel, not only provides cohesion to volumetric bodies or panels whose characteristics generally vary considerably, to create a single block that features all the thermal, acoustic or decorative qualities of each one of them, but increases robustness, rigidity and provides it with a larger format, for the inclusion of reinforcement meshing, polypropylene fibres, cables, slings, etc., contained in the link itself, which also acts as a reinforcement layer that is damp-resistant, soundproof and fire-resistant, as well as serving as a durable anti-evaporation, anti-pollution and anti-degradation barrier for the materials, chemical products or organic products themselves that have been used.

A sustainable construction system that enables the exposed surface layer of the block, panel or construction element to appear to be made of natural stone through the use of solvents, heat, fire, etc., to make said surface layer deformed or to give it a coarse or rough texture and to provide it with soundproof qualities, all in a totally random way and without it being necessary to use any mould, so that it looks like natural rock or volcanic rock, for the purpose of which pigments, cement, etc. or outer coats of paint can be utilised, so that it can be used to decorate interior or exterior surfaces and linings, while at the same time affording protection from the ravages of heat, the environment, noise, the weather, etc.

Coupling system that also makes use of recycles containers, packaging and other waste previously treated by impregnation with resins and polymers to seal their respective air chambers, containing in the adhesive a proportion of sand and various shredded substances with a view to improving the subsequent adhesion of the acrylic-cement mass that binds the mortar, improving its mechanical strength and reducing the cost involved by making it possible to use a combination of products that are more economical than other equivalent systems, while at the same time making it just as effective or more so through careful selection and combination of said products.

### DESCRIPTION OF FIGURES

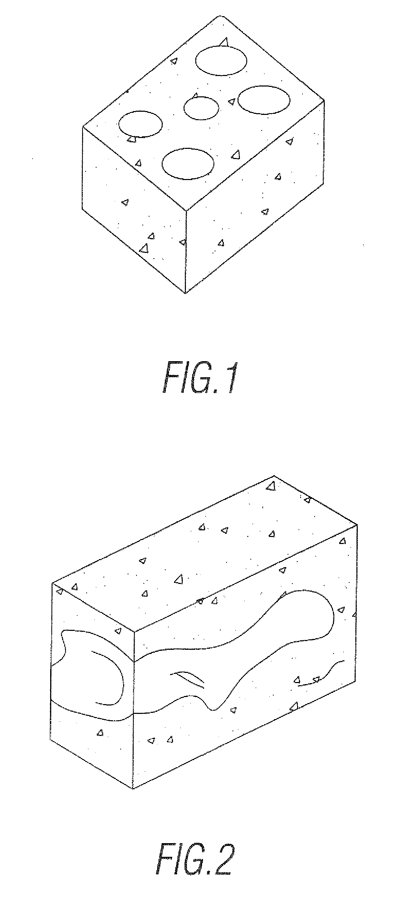

**Figure 1****:** block or brick of recyclable elements made from the recyclable mortar that is the object of this invention. The empty spaces made from tin cans or glass bottles. The spaces can be filled in if greater support is required during construction.
**Figure 2****:** brick of recyclable elements made from the recyclable mortar that is the object of this invention. Brick cut from a larger block made from recyclable mortar. Various materials (cork, clay, expanded polystyrene and agglomerated cement).

According to one important aspect of this invention, it is a universal mortar that contains materials whose average density for the dry finished product ranges from 200 to 600 Kg/m³, originating from different volumetric bodies selected from the group comprising household and industrial waste, empty containers, packaging, polystyrenes, polyurethanes and polyisocyanates, amongst others.

According to another important aspect of this invention, it relates to a universal mortar that forms a homogenised heterogeneous mix with the materials selected from the group composed of acrylic polymers and cements, limes, plaster, various minerals, vegetable and mineral fibres and acrylic fibres (clothing) elastomers, synthetic resins, whether these are in a solid, liquid, gaseous or projected state, as well as reinforcement meshing, ironwork, cables and slings, amongst others.

According to another important aspect, this invention relates to the protection of a construction element or system that is obtained using moulds or containers through an *in situ* building up process through the direct provision of the elements that form the mortar whether they are in a solid, liquid, gaseous or projected state. This material can be floating and/or a thermoacoustic material. This material can be water-resistant and fire-retardant.

According to another aspect, the construction element or system comprises additionally decorative materials on its exposed surface, which can be selected from the group of ceramic, glass or wood elements, smooth or coarse elements, pigments, varnishes, stainless steel, aluminium, metal sheeting, glass, PVC, Formica, stone, marble and metals, amongst others.

According to another important aspect, this invention protects a procedure for obtaining a mortar that comprises the following steps:
a) Selection of the raw materials or low-density elements that are going to form the mortar.
b) Preparing a homogeneous or heterogeneous mix with the low-density materials from step b).
c) Binding the mix obtained at step c) using adhesion materials selected from the group composed of acrylic-cement products, fibres and/or reinforcement meshing, polymers and other products, solid, liquid, gaseous or projected, and using external or internal vibrating elements until the average cohesion, homogenisation and density is reached for the finished dry product, this average ranging from 200 to 600 kg/m³.

This procedure also has a final step e), which involves pouring it onto the surface where it is to be used or into moulds or containers of different sizes, depending on what the mortar is to be used for. Decorative materials can be added to the composite product obtained at step e). When the materials selected at Phase a) have thermal and/or acoustic properties, the mortar obtained has thermal and/or acoustic properties.

According to another important aspect, this invention relates to protecting the use of the mortar for the preparation of floating structures, such as different kinds of platforms on water, bridges, marine or river marker buoys, oyster beds, seafood hatcheries, floating islands, breakwater construction, floating docks and pontoons, jetties, artificial reefs, amongst others.

According to another important aspect, this invention protects the use of the mortar for the preparation of single-block structures with thermal, acoustic and/or decorative properties, of the block and/or artificial panel type, for the construction, insulation, soundproofing and waterproofing and for the incorporation of decorative finishes, for example, for decorating buildings. The use of the mortar is also protected for the preparation of single-block structures such as bricks for construction purposes and for the construction of walls and paving.

## Claims

1. A universal recyclable mortar **characterised in that** it contains materials whose average density for the dry finished product ranges from 200 to 600 kg/m³, originating from different volumetric bodies selected from the group comprising household and industrial waste, empty containers, packaging, polystyrenes, polyurethanes and polyisocyanates, reeds, cork, straw, sawdust, wood shavings and even metal shavings, plant roots, pearlite, vermiculite, rock wool, resins, even acrylic resins, water, air and helium.

2. A universal recyclable mortar according to claim 1, **characterised in that** it forms a homogenised heterogeneous mix with the materials selected from the group composed of acrylic polymers and cements, limes, plaster, various minerals, vegetable mineral, textile and acrylic fibres, elastomers, synthetic resins, whether these are in a solid, liquid, gaseous or projected state, as well as reinforcement meshing, ironwork, cables and slings, amongst others.

3. A construction element or system **characterised in that** it is obtained using moulds or containers by means of an *in situ* cumulative process through the direct provision of the various elements that constitute the mortar in any of the solid, liquid, gaseous or projected states.

4. A construction element or system **characterised in that** it is a floating material.

5. A construction element or system **characterised in that** it is a thermoacoustic material.

6. A construction element or system **characterised in that** it is a water-resistant and fire-retardant material.

7. A construction element or system according to claim 3 **characterised in that** it also features decorative materials on its outer surface.

8. A construction element or system according to any of claims 3 or 6 **characterised in that** the decorative materials are selected from the group composed of ceramic, glass and wooden elements, as well as plain or coarse elements, pigments, varnishes, stainless steel, aluminium, metal sheeting, PVC, formica, stone, marble and metals, cork and textile elements, amongst others.

9. A procedure for obtaining a mortar according to any of claims 1 and 2 **characterised in that** it comprises the following steps:
a) Selection of the raw materials or low-density elements forming the mortar.
b) Preparing a homogeneous or heterogeneous mix with the low-density materials from step b).
c) Binding the mix obtained at step c) using adhesion materials selected from the group composed of acrylic-cement products, fibres and/or reinforcement meshing, polymers and other products, solid, liquid, gaseous or projected, and using external or internal vibrating elements until the average cohesion, homogenisation and density is reached for the finished dry product, this average ranging from 200 to 600 kg/m³.

10. A procedure for preparing a mortar according to claim 7 **characterised in that** there is also a final step e), which involves pouring it into moulds or containers of different sizes, depending on what the mortar is to be used for.

11. A procedure for preparing a mortar according to claim 9 **characterised in that** decorative materials are added to the composite product obtained at step e).

12. A procedure for preparing a mortar according to claim 7 **characterised in that** when the materials selected at step a) have thermal and/or acoustic properties, the mortar obtained has thermal and/or acoustic properties.

13. Use of the mortar according to claims 1 and 2, for the preparation of floating structures.

14. Use of the mortar according to claim 12, for the preparation of floating structures such as platforms on water, bridges, marine or river marker buoys, oyster beds, seafood hatcheries, floating islands, breakwater construction, floating docks and pontoons, jetties, artificial reefs and artificial beaches, amongst others.

15. Use of the mortar according to claim 1 and 2, for the preparation of single-block structures with thermal, acoustic and/or decorative properties.

16. Use of the mortar according to claim 14, for the preparation of single-block structures of the artificial block and panel type for construction, insulation, soundproofing, fireproofing and waterproofing and incorporating decorative finishes.

17. Use of the mortar according to claims 1 and 2, for the preparation of single-block structures such as bricks for construction purposes and for the construction of walls and paving.
